Europäisches Patentamt

**European Patent Office**

Office européen des brevets

(11) Publication number: **0 310 185**
**A1**

(12) **EUROPEAN PATENT APPLICATION**

(21) Application number: **88202091.0**

(22) Date of filing: **26.09.88**

(51) Int. Cl.⁴: **A01J 25/04 , B08B 9/08**

(30) Priority: **29.09.87 NL 8702319**

(43) Date of publication of application:
**05.04.89 Bulletin 89/14**

(84) Designated Contracting States:
**AT BE CH DE ES FR GB GR IT LI LU NL SE**

(71) Applicant: **N.V. MACHINEFABRIEK TERLET**
**Oostzeestraat 6**
**NL-7202 CM Zutphen(NL)**

(72) Inventor: **Boer, Jort**
**Brinkerhof 95**
**NI-7251 WV Vorden(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) **Kettle with stirring mechanism and spraying means.**

㉗ Kettle for the preparation and/or processing of viscous foodstuffs, provided with spraying means for cleaning the interior of the kettle, and optionally provided with a stirring mechanism and/or scraping mechanism, which spraying means are formed by spraying heads which, at least in the nonoperating position, lie in one plane with the inside of the wall and the wall of the kettle. The spraying head comprises a cylinder (3) which is set up transversely to the wall (1) of the kettle, the end of the cylinder facing the kettle lying in one plane with the inside of the wall, to which cylinder a feed (5) for pressurized cleaning medium is connected and in which cylinder a piston (13, 14) is movably provided with a sealing part in order to be able to seal the said end of the cylinder, the piston being loaded in one direction by the medium and in the other direction by a spring (15) or the like.

fig-2

EP 0 310 185 A1

## Kettle with stirring mechanism and spraying means

The invention relates to a kettle for the preparation and/or processing of viscous foodstuffs, such as cream, condensed milk, jam and the like, provided with spraying means for cleaning the interior of the kettle, and optionally provided with a stirring mechanism and/or scraping mechanism.

Such stirred kettles are used in practice, for example, for crystallizing whey, manufacturing cream, manufacturing condensed milk, manufacturing jam, etc.

The stirring mechanism may remain free of the vertical wall during stirring or scrape along it.

Such kettles have to be regularly cleaned, for which purpose one or more spraying heads with whose help liquid cleaning agent can be injected into the kettle are set up in the cover.

The entire interior of the kettle is not, however, reached in this manner and it is necessary to enter the kettle or to lower a rod with a spray head into the kettle. This last method requires space above the kettle which is not always available.

The cleaning of the known kettles therefore often leaves something to be desired.

The object of the invention is to improve said known stirred kettle in this respect and this is achieved, according to the invention, in that spraying heads which, at least in the nonoperating position, lie in one plane with the inside of the wall are installed at one or more points in the wall of the kettle.

In this manner, an effective spraying action can be obtained in the kettle.

The cleaning medium is not only used for cleaning, but the pressure of the medium ensures that the spraying heads open.

In kettles which make use of scraping means it is essential to prevent parts of the spraying head(s) projecting into the kettle.

Preferably, the spraying heads do not project beyond the inside of the wall even in the operating position.

According to a practical embodiment, each spraying head comprises, according to the invention, a cylinder which is set up transversely to the wall of the kettle, the end of the cylinder facing the kettle lying in one plane with the inside of the wall, to which cylinder a feed for pressurized cleaning medium is connected and in which cylinder a piston is movably provided with a sealing part in order to be able to seal the said end of the cylinder, the piston being loaded in one direction by the medium and in the other direction by a spring or the like.

The invention will now be explained in more detail with reference to the drawing of three embodiments in which:

Figure 1 shows a longitudinal section of a sprayer according to the invention which is not suitable for a kettle provided with a scraping mechanism.

Figure 2 shows a longitudinal section of a sprayer according to the invention which is in fact suitable for a kettle provided with a scraping mechanism.

Figure 3 shows a longitudinal section of a sprayer according to the invention which is in fact suitable for a kettle provided with a scraping mechanism and which is intended, in particular, for thick substances, sugar crystals, jam or the like.

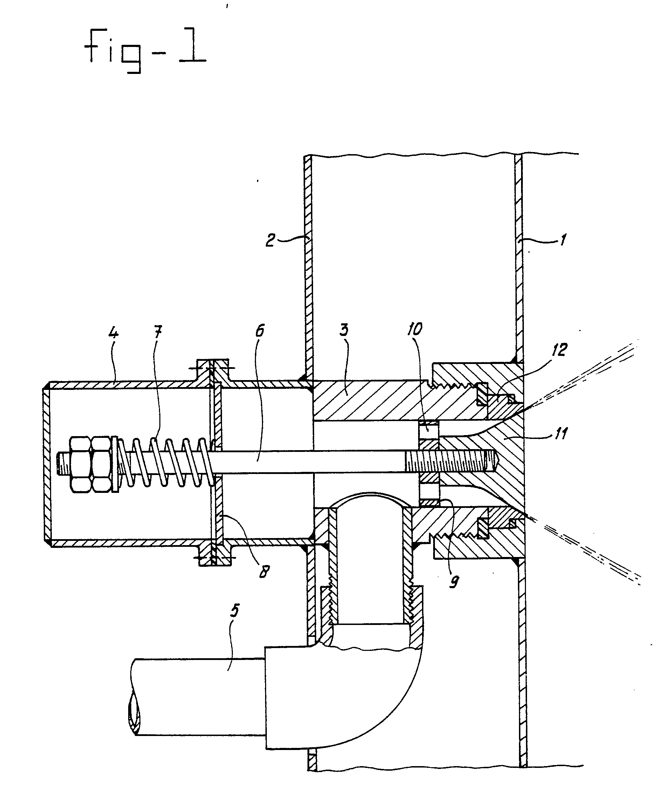

The sprayer according to Figure 1 is installed in the wall, generally double, of a kettle bounded by the inside wall 1 and the outside wall 2.

The housing of the sprayer comprises a thick-walled part 3 between the walls 1 and 2 and a thin-walled part 4 outside the outside wall 2.

A medium feed 5 connects to the part 3. The thick-walled part 3 is constructed as a cylinder.

In the interior of the housing 3, 4, there is a rod-type element 6 which can be moved axially and which is preloaded by a spring 7 and a transverse wall 8 in the inward direction.

At the end facing the wall 1, the element 6 comprises a piston 9 with a number of axially extending passages 10 and a conical sealing part 11.

In the closed, nonoperating position, the wider edge of the sealing part 11 is up against a sloping edge of an element 12 fixed to the housing part 3.

Diverse seals are also furthermore present.

The sprayer according to Figure 1 is shown in the nonoperating position, the face of the head of the sealing part 11 lying in one plane with the inside of the wall 1.

If pressurized cleaning medium is supplied via the connection, pressure is exerted on the sealing part 11 as a result of which it moves outwards into the kettle against the action of the spring 7.

At the same time, the medium passes through the openings 10 and is injected as a cone into the kettle via the conical annular gap between the sealing part 11 and the fixed element 12.

Because the sealing part 11 projects into the kettle beyond the inside of the wall 1 in the operating position, this embodiment is not suitable for a kettle in which a scraping mechanism, which is not shown, is up against the inside of the wall 1.

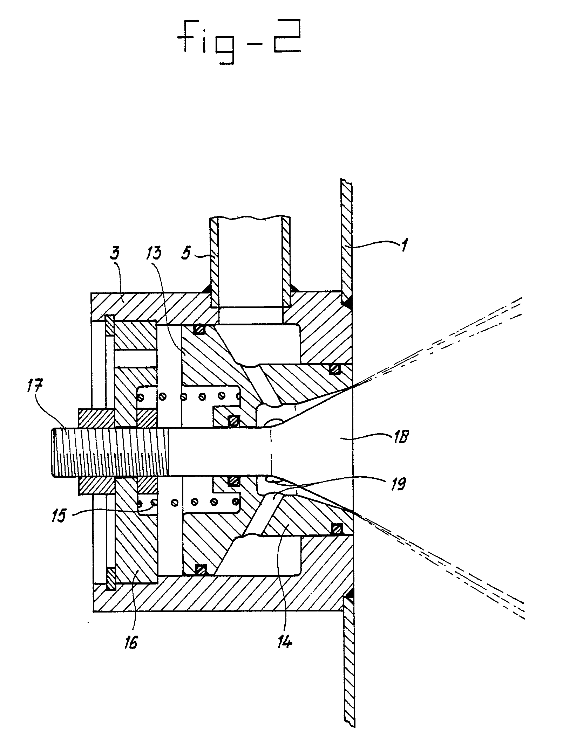

This is, however, the case in the embodiment according to Figure 2.

Installed in the cylinder 3 is a differential piston comprising a larger part 13 and a smaller part 14. The piston 13, 14 is preloaded to the right by a spring 15 which rests against a transverse wall 16.

Screwed into said transverse wall 16 is an element 17 which extends axially in the housing part 3 and terminates in a conical sealing part 18 which can interact with an end rim of the thinner piston part 14.

The element 17, 18 is installed in the transverse wall 16 in a manner such that the end face of the sealing part 18 lies in one plane with the inside of the wall 1.

Arranged in the wall of the piston part 14 are channels 19 which are distributed over the circumference. Said channels 19 extend obliquely in the direction of the kettle.

They may extend in radial planes or in tangential planes.

In the last case, the piston 13, 14 can be made to rotate.

As a result of the shape of the end rim of the thinner piston part 14, said part 14 is also unable to project beyond the inside of the wall 1 under the influence of the spring 15.

When pressurized cleaning medium is supplied via the connection 5, the piston 13, 14 will move to the left against the action of the spring 15.

A conical annular gap is therefore made free between the inside of the piston part 14 and the outside of the sealing part 18.

A conical jet, which optionally rotates, is therefore produced.

In this embodiment nothing extends out inside the inside of the wall 1 even in the operating position. Scraping elements are therefore not impeded.

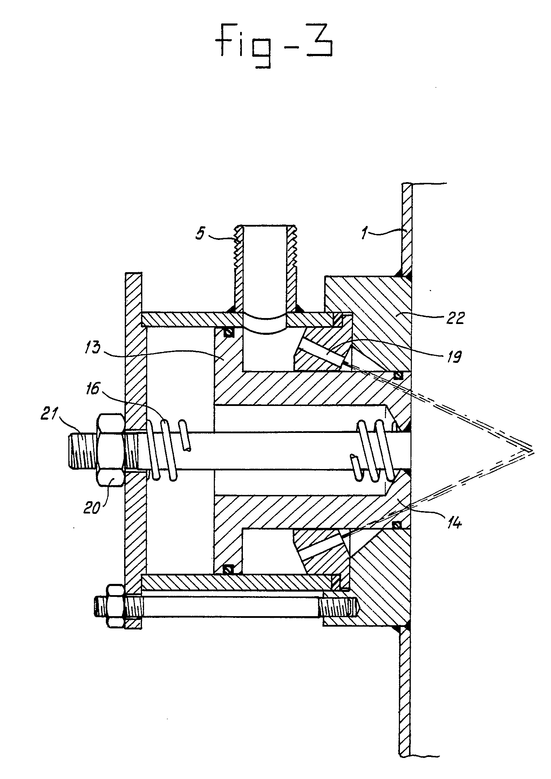

This applies also to the embodiment according to Figure 3. This embodiment is intended primarily for kettles in which thick substances, such as sugar crystals and jam are processed.

In this case, a multiplicity of directed jets are obtained.

In this embodiment, the differential piston 13, 14 is loaded by the compression spring 15, but the nonoperating end position is reached when the nut 20 on the rod 21 comes up against the transverse wall 16. The rod 21 is firmly joined to the piston part 14.

In this position, the face of the head of the piston part 14 lies in one plane with the part 22 which is joined to the wall 1 and does not therefore impede any scraping element.

The spray opening is formed in this embodiment when the piston 13, 14 is moved to the left by the pressure of the medium via 5, against the action of the spring 16.

Obliquely and/or tangentially extending channels provide jets which spray alongside each other.

Obviously, several spray heads may be installed in the wall of a kettle.

## Claims

1. Kettle for the preparation and/or processing of viscous foodstuffs, such as cream, condensed milk, jam and the like, provided with spraying means for cleaning the interior of the kettle, and optionally provided with a stirring mechanism and/or scraping mechanism, characterized in that spraying heads which, at least in the nonoperating position, lie in one plane with the inside of the wall are installed at one or more points in the wall of the kettle.

2. Kettle according to Claim 1, characterized in that the spraying head or heads do not project beyond the inside of the wall even in the operating position.

3. Kettle according to Claim 1 or 2, characterized in that the spraying head comprises a cylinder which is set up transversely to the wall of the kettle, the end of the cylinder facing the kettle lying in one plane with the inside of the wall, to which cylinder a feed for pressurized cleaning medium is connected and in which cylinder a piston is movably provided with a sealing part in order to be able to seal the said end of the cylinder, the piston being loaded in one direction by the medium and in the other direction by a spring or the like.

4. Kettle according to Claim 1 or 3, characterized in that the piston is provided with channels for allowing the cleaning medium through and forms one entity with a conical sealing part, with the largest diameter at the side facing away from the piston, which sealing part projects beyond the inside of the wall of the kettle in the operating position.

5. Kettle according to Claim 1, 2 or 3 characterized in that the piston is constructed as a differential piston which is loaded Δby the spring to the position in which the end of the head of the piston lies in one plane with the inside of the kettle wall but is unable to pass said position.

6. Kettle according to Claim 5, characterized in that the conical sealing part is installed in a fixed position and the largest diameter thereof forms a stop for the piston and, in the position in which the piston is retracted by means of the pressurized cleaning medium, forms an annular spray opening with the inside of the piston.

7. Kettle according to Claim 5 or 6, characterized in that channels are formed in the thinner part of the differential piston to allow pressurized cleaning medium through into the interior of the differential piston.

8. Kettle according to Claim 7, characterized in that the channels extend tangentially in order to generate rotating spray jets.

fig-1

fig-2

# Fig-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CH-A-603031 (J.J.GOAVEC)<br>* column 2, line 50 - line 56; figure 1 *<br>--- | 1 | A01J25/04<br>B08B9/08 |
| Y | US-A-3804338 (J.W.WILLIAMS)<br>* abstract; figure 1 *<br>--- | 1 | |
| A | US-A-2909325 (E.J.HUNTER)<br>* column 2, line 25 - line 64; figures 1-2 *<br>--- | 1 | |
| A | US-A-4046155 (M.MANSSON)<br>* abstract; figure 1 *<br>--- | 1 | |
| A | DE-A-2641425 (KLÖCKNER-HUMBOLDT-DEUTZ AG)<br>----- | | |

TECHNICAL FIELDS
SEARCHED (Int. Cl.4)

A01J
B08B

The present search report has been drawn up for all claims

| Place of search | Date of completion of the search | Examiner |
|---|---|---|
| THE HAGUE | 17. NOVEMBER 1988 | NEHRDICH H.J |

EPO FORM 1503 03.82 (P0401)